Europäisches Patentamt

(19) European Patent Office

Office européen des brevets

(11) Numéro de publication: **0 101 395**
B1

(12) **FASCICULE DE BREVET EUROPEEN**

(45) Date de publication du fascicule du brevet:
19.03.86

(51) Int. Cl.⁴: **C 01 G 43/00, C 22 B 60/02**

(21) Numéro de dépôt: 83420138.6

(22) Date de dépôt: 10.08.83

(54) **Procédé amélioré de dissolution du tétrafluorure d'uranium impur.**

(30) Priorité: 12.08.82 FR 8214352

(43) Date de publication de la demande:
22.02.84 Bulletin 84/8

(45) Mention de la délivrance du brevet:
19.03.86 Bulletin 86/12

(84) Etats contractants désignés:
BE GB IT NL SE

(56) Documents cités:
FR - A - 2 429 746
US - A - 2 900 226

JOURNAL OF APPLIED CHEMISTRY, vol. 16, août 1966,
pages 248-252, I.L. JENKINS et al.: "The recovery of
uranium from zircaloy-uranium alloy"

(73) Titulaire: URANIUM PECHINEY, Tour Manhattan, La
Défense 2, 6, place de l'Iris,, F-92400 Courbevoie (FR)

(72) Inventeur: Floreancig, Antoine, Chemin du Clos Chipier,
F-69230 St-Genis Laval (FR)

(74) Mandataire: Vanlaer, Marcel et al, PECHINEY 28, rue de
Bonnel, F-69433 Lyon Cédex 3 (FR)

## Description

L'invention concerne un procédé amélioré d'obtention d'une solution de nitrate d'uranyle par dissolution de tétrafluorure d'uranium impur, au moyen d'une solution d'acide nitrique en présence d'un composé d'aluminium, procédé consistant à introduire ces deux réactifs en deux étapes.

Il est connu, par le document US-A-2 900 226, que, pour récupérer l'uranium de déchets, on peut les traiter alternativement par de l'acide fluorhydrique gazeux et de l'hydrogène, puis les soumettre au cours de trois étapes successives au moins à l'action d'acide nitrique, les deux premières étant réalisées en présence d'ions aluminium.

Il est également connu, depuis longtemps, d'effectuer la dissolution de l'$UF_4$ au moyen d'acide nitrique et d'un complexant des ions fluorures, constitué par un composé de l'aluminium. C'est ainsi que la demonde française-FR-A-2 429 746 décrit un tel procédé consistant à soumettre le tétrafluorure d'uranium à une digestion dans une solution acide en présence d'un tel agent complexant des fluorures, selon l'équation non équilibrée:

$$UF_4 + 2 HNO_3 \longrightarrow UO_2^{2+} + 2(NO_{3-}),$$

les ions fluorures étant complexés par le composé de l'aluminium initialement introduit, composé d'aluminium capable de former un complexe fluoré

$AlF_6^{3-}$ soluble dans le milieu de traitement.

Or, quand l'homme de l'art réalise la dissolution de $UF_4$ impur dans unesolution concentrée d'acide nitrique en présence d'un composé de l'aluminium, il arrive que le milieu résultant du traitement soit non plus la solution uranifère attendue, mais une suspension de fines particules dont la phase liquide contient des ions $NO_3^-$, $UO_2^{2+}$, $AlF_6^{3-}$ et des impuretés, et dont la phase solide est constituée en majeure partie par $AlF_3, n H_2O$ se présentant sous la forme d'un gel ayant la particularité de retenir une quantité plus ou moins importante de l'uranium.

Dès lors qu'il apparait une suspension à la place de la solution attendue, il devient nécessaire d'opérer une séparation des phases avant d'effectuer la récupération de l'uranium. Mais il a été constaté que cette séparation est extremement difficile, voire même impossible dans le cas, par exemple, d'une séparation par filtration en raison du colmatage rapide des pores du substrat filtrant par les fines particules.

La demanderesse, s'étant heurtée à cette difficulté et forte des inconvéients précités, a recherché les causes profondes de ce phénomène eta trouvé, puis mis au point un procédé de dissolution de $UF_4$ impur permettant une séparation plus facile des phases solide et liquide de la suspension résultant de la dissolution.

Le procédé selon l'invention de dissolution à chaud de tétrafluorured'uranium impur dans une solution d'acide nitrique en présence d'un composé d'aluminium est caractérisé en ce que, dans le but d'obtenir une solution de nitrate d'uranyle aisément séparable de la phase solide formée lors du traitement, cette dissolution est réalisée en deux étapes à une température comprise entre 60 et 110° C, la première étape consistant à introduireune quantité d'acide nitrique au plus égale à 0,90 fois la quantité cumulée pour solubiliser complètement le tétrafluorure d'uranium et une quantité du composé d'aluminium au plus égale à 0,95 fois la quantité stoechiométrique correspondant à la formation de $AlF_6^{3-}$ et à maintenir sous agitation pendant un temps d'au moins 0,5 heure, la deuxième étape consistant à introduire des quantités d'acide nitrique et de composé d'aluminium telles que les quantités cumulées dans les deux étapes sont, pour le composé d'aluminium au moins égales à la stoechiométrie correspondant à la formation de $AlF_6^{3-}$ et pour l'acide nitrique conduit à une acidité libre d'au moins 0,5 mole de $HNO_3$ par litre de solution et à maintenir sous agitation la suspension.

Selon le procédé de l'invention, le tétrafluorure d'uranium traité peut provenir de la récupération de l'uranium de l'acide phosphorique par extraction au moyen d'un solvant approprié et réextraction de l'uranium au moyen d'acide fluorhydrique, tel que décrit par exemple dans le brevet américain 2 866 680 qui préconise l'usage de l'acide octylpyrophosphorique comme solvant d'extraction de l'uranium. Ce tétraflurorure d'uranium impur peut également provenir d'autres sources, telle que celle constituée par exemple, par certains $UF_4$ impurs obtenus lors de la fluoration de l'oxyde d'uranium.

Lors de ses recherches, la demanderesse ayant voulu valoriser l'uranium du tétrafluorure d'uranium impur a tenté d'utiliser le procédé bien connude redissolution de ce composé d'uranium par de l'acide nitrique en présence d'un composé d'aluminium, mais elle s'est heurtée à l'appa- rition dans la solution de nitrate d'uranyle d'un gel en suspension qu'elle n'a pas pu séparer. La demanderesse, devant cette difficulté, a cherché à aménager les conditions d'application du procédé connu en faisant varier la température, le temps de dissolution, les proportions relatives des réactifs, sans jamais à atoutir à une suspension dont les constituants soient aisément séparables.

Quels que soient ses travaux, la demanderesse ayant constaté l'impossibilité d'obtenir une solution de nitrate d'uranyle aisément séparable, a poursuivi ses recherches et a trouvé que, contrairement aux procédés de l'art antérieur, il est nécessaire d'effectuer une dissolution du tétraflourure d'uranium impur en deux étapes pour parvenir à une separation aisée des phases liquide et solide constituant la suspension résultant du traitement acide en présence du composé de l'aluminium.

Selon le precédé de l'invention, la quantité cumulée dans les deux étapes du composé d'aluminium, pour complexer le fluor provenant de l'$UF_4$, doit être au moins égale à la stoechiométrie correspondantà la formation de $AlF_6^{3-}$ et, préférentiellement comprise entre 1,15 et 1,50 fois cette stoechiométrie.

La quantité cumulée dans les deux étapes de l'acide nitrique nécessaire à la dissolution de l'$UF_4$ impur est telle que l'acidité libre à l'issue de la deuxieme étape doit être d'au moins 0,5 mole de $HNO_3$ par litre de solution et, préférentiellement comprise entre 1 et 5 moles par litre de solution.

La quantité de composé d'aluminium introduite lors de la réalisation de la première étape est au plus égale à 0,95 fois la quantité stoechiométrique correspondant à la formation de $AlF_6^{3-}$ pour le fluorengagé mais, préférentiellement choisie dans l'intervalle de 0,60 à 0,90 fois ladite quantité stoechiométrique.

La quantité d'acide nitrique introduite lors de la réalisation de la première étape est au plus égale à 0,9 fois la quantité cumulée d'acide nitrique pour solubiliser l'uranium de l'$UF_4$ et, préférentiellement - comprise entre 0,5 et 0,75 fois cette quantité cumulée.

La température nécessaire à la mise en solution de l'$UF_4$ est choisie, pour les deux étapes, dans l'intervalle 60°C à 110°C et, préférentiellement dans l'intervalle 70°C à 90°C.

Le temps d'agitation, lors de l'exécution de la première étape, est choisi de telle minière que les particules de fluorure d'aluminium hydraté puissent atteindre une dimension suffisante. Ce temps, qui doit être d'au moins trente minutes, estgénéralementchoisi entre une heure et douze heures et,préférentiellemententre une et cinq heures.

Le temps d'agitation, lors de l'exécution de la deuxième étape, a moins d'influence sur la sépration des phases liquide et solide de la suspension résultant de la dissolution du fluorure d'uranium, mais il doit être suffisant pour permettre la solubilisation de l'uranium. Pour ce faire, il est généralement choisi entre 0,5 et douze heures et, préférentiellement entre une et cinq heures.

Le composé d'aluminium utilisé pour complexer les ions fluorures provenant du tétrafluorure d'uranium est généralement choisi dans le groupe constitué par le chlorure d'aluminium, le nitrate d'aluminium, l'alumine, l'hydroxyde d'aluminium, le sulfate d'aluminium ainsi que par les composés de l'aluminium capables de former un complexe soluble de fluorure d'aluminium. En pratique, le composé d'aluminium est, dans la majorité des cas, l'alumine ou l'hydroxyde d'aluminium, ces deux produits étant les plus disponibles industriellement.

L'invention sera mieux comprise grâce aux exemples cités à titre illustratif:

**EXEMPLE 1:**

Cet exemple illustre un procédé de dissolution en une seule étape, selon l'art antérieur, de tétrafluorure d'uranium impur.

Pour ce faire, on a traité 1000 g de $UF_4$ impur provenant de l'extraction de l'uranium de l'acide phosphorique au moyen de l'acide cctylpyrophosphorique dont la réextraction a été faite par l'intermédiaire de l'acide fluorhydrique.

Le tétrafluorure d'uranium impur, non séché, avait la composition suivante en pour cent en poids:
Uranium 15,7 %
Fluor lié 9,4 %
Fer 0,8 %
Calcium 0,6 %
HF libre 8,2 %
Phosphore 0,1 %
Humidité et divers 65,2 %

Cette quantité d'$UF_4$ a été placée dans un réacteur puis a été traitée à une température de 90°C pendant quatre heures au moyen de $Al_2O_3$, 3 $H_2O$ et d'acide nitrique ccmmercial à 55 % de $HNO_3$. La quantité d'alumine utilisée était de 1,15 fois la stoechiométrie correspondant à la formation de $AlF_6^{3-}$ et la quantité d'acide nitrique était de 6 moles d'acide nitrique par mole d'alumine intrcduite. Dans ces conditions, l'acidité libre en fin de réaction était de 3 moles par litre.

Ainsi on a obtenu une suspension visqueuse qui a nécessité douze heures pour réaliser la séparation des phases constitutives par filtration sous vide sur toile filtrante.

**EXEMPLE 2:**

Cet exemple, qui illustre le procédé de l'invention, concerne la dissolution en deux étapes du même tétrafluorure d'uranium que célui utilisé dans l'exemple 1.

Selon la première étape du procédé on a introduit 1000 g de cet $UF_4$ impur dans le même réacteur que celui de l'exemple 1, avec une quantité d'alumine égale à 0,8 fois la stoechiométrie correspondant à la formation de $AlF_6^{3}$ et une quantité d'acide nitrique correspondant à six moles d'acide nitrique par mcle d'alumine introduite. Le milieu réactionnel a été maintenu sous agitation à une température de 90°C pendant une heure.

Selon la deuxième étape du procédé, on a inteoduit dans le réacteur, à l'issue de la première étape, une quantité d'alumine égale à 0,35 fois la stoechiométrie correspondant à la formation de $AlF_6^{3-}$ et une quantité d'acide nitrique égale à six moles d'acide nitrique par mole d'alumine introduite dans cette deuxième étape. Le milieu réactionnel a été maintenu sous agitation à la température de 90°C pendant une heure. L'acidité libre, en fin de réaction, était de 2,98 moles d'acide nitrique par litre.

A l'issue du déroulement des deux étapes du procédé selon l'invention, on a pu constater que la suspension obtenue avait un aspect très différent de celui observé dans l'exemple 1. Cette suspension a nécessité seulement douze minutes pour réaliser la séparation des phases constitutives par filtration sous vide en utilisant le même appareillage que dans l'exemple 1.

Ainsi, on a pu constater une importante diminution du temps de filtration, bien que les quantités cumulées de réactifs utilisés dans cet exemple soient les mêmes que celles utilisées dans l'exemple 1 qui illustrait l'art anterieur.

**EXEMPLE 3:**

Cet exemple, qui illustre également le procédé de l'invention, concerne la dissolution en deux étapes du même tétrafluorure d'uranium que celui utilisé dans les exemples précédents.

Selon la première étape, onatraité 1000 g d'UF$_4$ selon les mêmes conditions et en utilisant les mêmes quantités de réactifs que dans l'exemple 2, hormis le temps d'agitation qui a été fixé à trois heures.

A la fin de la première étape, on ajoute, pour la deuxième étape, les mêmes quantités de réactifs que dans l'exemple 2, tout en conservant le temps d'agitation à une heure.

A la fin de ce traitement par étapes, la suspension obtenue a été soumise à une séparation par filtration dans le même appareillage que dans les exemples précédents. Cette séparation a nécessité deux minutes seulement.

Ceci montre encore une fois l'intérêt d'opérer la dissolution d'UF$_4$ en deux étapes, avec un défaut de réactif dans la première étape.

**Revendications**

1. Procédé de dissolution à chaud de tétrafluorure d'uranium impur dans une solution d'acide nitrique en présence d'un composé d'aluminium, caractérisé en ce que, dans le but d'obtenir une solution de nitrate d'uranyle aisément séparable de la phase solide formée lors du traitement, cette dissolution est réalisée en deux étapes à une température comprise entre 60 et 110° C, la première étape consistant à introduire une quantité d'acide nitrique au plus égale à 0,90 fois la quantité cumulée pour solubiliser complètement le tétrafluorure d'uranium et une quantité du composé d'aluminium au plus égale à 0,95 fois la quantité stoechiométrique correspondant à la formation de AlF$_6^{3-}$ et à maintenir sous agitation pendant un temps d'au imoins 0,5 heure, la deuxième étape consistant à introduire des quantités d'acide nitrique et de composé d'aluminium telles que les quantités cumulées dans les deux étapes sont, pour le composé d'aluminium, au moins égales à la stoechicmétrie correspondant à la formation de AlF$_6$ et pour l'acide nitrique conduit à une acidité libre d'au moins 0,5 mole de HNO$_3$ par litre de solution et à maintenir sous agitation la suspension.

2. Procédé de dissolution à chaud de tétrafluorure d'uranium impur selon la revendication 1, caractérisé en ce que la quantité cumulée dans lesdeux étapes du composé d'aluminium est comprise entre 1,15 et 1,50 fois la stoechiométrie correspondant à la formation de AlF$_6^{3-}$.

3. Procédé de dissolution à chaud de tétrafluorure d'uranium impur selon les revendications 1 et 2, caractérisé en ce que la quantité cumulée dans les deux étapes de l'acide nitrique nécessaire à la dissolution de l'UF$_4$ impur est telle que l'acidité libre, à l'issue de la deuxième étape, esr comprise entre une et cinq moles par litre de solution.

4. Procédé de dissolution à chaud de tétrafluorure d'uranium impur selon les revendications 1 et 2, caractérisé en ce que la quantité du composé d'aluminium dans la première étape est choisie dans l'intervalle de 0,60 à 0,90 fois la quantité stoechiométrique correspondant à la formationde AlF$_6^{3-}$.

5. Procédé de dissolution à chaud de tétrafluorure d'uranium impur selon l'une quelconque des revendications 1 à 3, caractérisé en ce que la quantité d'acide nitriiqe daan la première étape est comprise entre 05 et 0,75 fois la quantité cumulée pour solubiliser l'uranium.

6. Procédé de dissolution à chaud de tétrafluorure d'uranium impur selon l'une quelconque des revendications 1 à 5, caractérisé en ce que la température de dissolution de l'UF$_4$ est comprise entre 70° C et 90°C.

7. Procédé de dissolution à chaud de tétrafluorure d'uranium impur selon l'une quelconque des revendications 1 à 6, caractérisé en ce que le temps d'agitation lors de l'exécution de la première étape est compris entre 1 heure et 12 heures et, préférentiellement entre 1 heure et 5 heures.

8. Procédé de dissolution à chaud de tétrafluorure d'uranium impur selon l'une quelconque des revendications 1 à 7, caractérisé en ce que le temps d'agitation lors de l'exécution de la deuxième étape est compris entre 0,5 heure et 12 heures et, préférentiellement entre 1 heure et 5 heures.

9. Procédé de dissolution à chaud de tétrafluorure d'uranium impur selon l'une quelconque des revendications 1 à 8, caractérisé en ce que le composé d'aluminium est choisi dans le groupe constitué par le chlorure d'aluminium, le nitrate d'aluminium, le sulfate d'aluminium, l'alumine et l'hydroxyde d'aluminium.

## Patentansprüche

1. Verfahren zur Auflösung von unreinem Urantetrafluorid in der Wärme in einer Salpetersäurelösung in Gegenwart einer Aluminiumverbindung,
dadurch gekennzeichnet,
daß diese Lösung zwecks Erhaltens einer Uranylnitratlösung, die von der bei der Behandlung gebildeten festen phase leicht trennbar ist, in zwei Stufen bei einer Temperatur im Bereich von 60 bis 110 °C hergestellt wird, wobei die erste Stufe darin besteht, eine höchstens dem 0,90-fachen der kumulierten Menge zur vollständigen Auflösung des Urantetrafluorids gleiche Salpetersäuremenge und eine höchstens dem 0,95-fachen der der Bildung von $AlF_6^3$ entsprechenden stöchiometrischen Menge gleiche Menge der Aluminiumverbindung einzuführen und während einer Zeit von wenigstens 0,5 h unter Rühren zu halten, und die zweite Stufe darin besteht, derartige Salpetersäure- und Aluminiumverbindungsmengen einzuführen, daß die kumulierten Mengen in den zwei Stufen für die Aluminiumverbindung wenigstens gleich der der Bildung von $AlF_6^{3-}$ entsprechenden Stöchiometrie sind und für die Salpetersäure zu einer freien Azidität von wenigstens 0,5 Mol $HNO_3$ je Liter Lösung führt, und die Suspension unter Rühren zu halten.

2. Verfahren zur Auflösung von unreinem Ürantetrafluorid in der Wärme nach Anspruch 1, dadurch gekennzeichnet, daß die kumulierte Menge der Aluminiumverbindung in den zwei Stufen im Bereich vom 1,15- bis zum 1,50-fachen der der Bildung von $AlF_6^{3-}$ entsprechenden Stöchiometrie ist.

3. Verfahren zur Auflösung von unreinem Ürantetrafluorid in der Wärme nach den Ansprüchen 1 und 2, dadurch gekennzeichnet, daß die zur Auflösung des unreinen UF erforderliche kumulierte Menge der Salpetersäure in den zwei Stufen derart ist, daß die freie Azidität am Ausgang der zweiten Stufe im Bereich von 1 bis 5 Molen je Liter Lösung ist.

4. Verfahren zur Auflösung von unreinem Urantetrafluorid in der Wärme nach den Ansprüchen 1 und 2, dadurch gekennzeichnet, daß die Menge der Aluminiumverbindung in der ersten Stufe im Bereich von 0,60- bis zum 0,90-fachen der der Bildung von $A1F_6^{3-}$ entsprechenden stöchiometrischen Menge gewählt wird.

5. Verfahren zur Auflösung von unreinem Urantetrafluorid in der Wärme nach irgendeinem der Ansprüche 1 bis 3, dadurch gekennzeichnet, daß die Salpetersäuremenge in der ersten Stufe im Bereich von 0,5- bis zum 0,75-fachen der kumulierten Menge zur Auflösug das Urans ist.

6. Verfahren zur Auflösung von unreinem Urantetrafluorid in der Wärme nach irgendeinem der Ansprüche 1 bis 5, dadurch gekennzeichnet, daß die Temperatur zur Auflösung des $UF_4$ im Bereich von 70 °C bis 90 °C liegt.

7. Verfahren zur Auflösung von unreinem Urantetrafluorid in der Wärme nach irgendeinem der Ansprüche 1 bis 6, dadurch gekennzeichnet, daß die Rührzeit bei der Durchführung der ersten Stufe im Bereich von 1 h bis 12 h und vorzugsweise im Bereich von 1 h bis 5 h liegt.

8. Verfahren zur Auflösung von unreinem Urantetrafluorid in der Wärme nach irgendeinem der Ansprüche 1 bis 7, dadurch gekennzeichnet, daß die Rührzeit bei der Durchführung der zweiten Stufe im Bereich von 0,5 h bis 12 h und vorzugsweise im Bereich von 1 h bis 5 h liegt.

9. Verfahren zur Auflösung von unreinem Urantetrafluorid in der Wärme nach irgendeinem der Ansprüche 1 bis 8, dadurch gekennzeichnet, daß die Aluminiumverbindung aus der Gruppe gewählt wird, die aus dem Aluminiumchlorid, dem Aluminiumnitrat, dem Aluminiumsulfat, dem Aluminiumoxid und dem Aluminiumhydroxid gebildet ist.

## Claims

1. A method of dissolving impure uranium tetrafluoride hot in a nitric acid solution in the presence of an aluminium compound, characterised in that, for the purpose of obtaining a uranyl nitrate solution which can easily be separated from the solid phase formed during treatment, dissolving is carried out in two stages at a temperature from 60 to 110°C, the first stage comprising introducing a quantity of nitric acid at most equal to 0.9 times the total quantity of nitric acid required to solubilize the uranium and a quantity of the aluminium compound at mos t equal to 0.95 times the stoichiometric quantity corresponding to the formation of $AlF_6^{3-}$ and keeping the resultant suspension agitated for a period of at least 0.5 hour, and the second stage comarising introducing such quantities of nitric acid and of the aluminium compound that at both stages the total amount of aluminium compound is at least equal to the stoichiometric quantity corresponding to the formation of $AlF_6^{3-}$ and the total quantity of nitric acid is corresponding to a free acidity at least 0.5 mole of $HNO_3$ per litre of solution while keeping the suspension agitated.

2. The method of claim 1, characterised in that the total amount of aluminium coumpound at both stages is from 1.15 to 1.50 times the stoichiometric quantity corresponding to the formation of $AlF_6^{3-}$.

3. The method of claims 1 and 2, characterised in that the total quantity of nitric acid required to dissolve the impure $UF_4$ during both stages is such that the free acidity, at the end of the second stage, is from one to five moles of $HNO_3$ per litre of solution.

4. The method of claims 1 and 2, characterised in that the amount of aluminium compound at the first stage is chosen within the range from 0.60 to 0.90 times the stoichiometric quantity corresponding to the f ormation of $AlF_6^{3-}$

**0 101 395**

5. The method of claims 1 to 3, characterised in that the quantity of nitric acid at the first stage is from 0.5 to 0.75 times the total quantity of nitric acid required to solubilize the uranium.

6. The method of any of claims 1 to 5, characterised in that the temperature for dissolving the UF$_4$ is from 70° to 90° C.

7. The method of any of claims 1 to 6, characterised in that the agitating time during the first stage is from one hour to 12 hours, and preferably from one hour to five hours.

8. The method of any of claims 1 to 7, characterised in that the agitating time during the second stage is from 0.5 hour to 12 hours, and preferably from one hour to five hours.

9. The method of any of claims 1 to 8, characterised in that the aluminium compound is chosen from the group comprising aluminium chloride, aluminium nitrate, aluminium sulfate, alumina and alumininm hydroxide.